Europäisches Patentamt

European Patent Office

Office européen des brevets

(19)

(11)     EP 0 583 220 B1

(12)     EUROPÄISCHE PATENTSCHRIFT

(45) Veröffentlichungstag und Bekanntmachung des Hinweises auf die Patenterteilung:
20.11.1996   Patentblatt 1996/47

(51) Int Cl.6: **C09D 183/02**, H01B 1/14, C08K 5/45, C08K 5/48

(21) Anmeldenummer: 93810482.5

(22) Anmeldetag: 06.07.1993

(54) **Beschichtetes Material, dessen Herstellung und Verwendung**

Coated material, its production and use

Matériau revêtu, sa production et son utilisation

(84) Benannte Vertragsstaaten:
AT BE CH DE DK ES FR GB IE IT LI NL PT SE

(30) Priorität: 15.07.1992  CH 2227/92

(43) Veröffentlichungstag der Anmeldung:
16.02.1994   Patentblatt 1994/07

(73) Patentinhaber: **CIBA-GEIGY AG**
**4002 Basel (CH)**

(72) Erfinder:
• **Minder, Ernst**
**CH-4450 Sissach (CH)**
• **Hofherr, Walther, Dr-**
**D-7815 Kirchzarten-Zarten (CH)**

(56) Entgegenhaltungen:
EP-A- 0 340 421          EP-A- 0 447 603
US-A- 5 009 812

• DATABASE WPI Week 9228, Derwent Publications Ltd., London, GB; AN 92-229907
• DATABASE WPI Week 9149, Derwent Publications Ltd., London, GB; AN 91-358664
• PATENT ABSTRACTS OF JAPAN vol. 17, no. 176 (C-1045)6. April 1993
• PATENT ABSTRACTS OF JAPAN vol. 15, no. 219 (E-1074)5. Juni 1991
• DATABASE WPI Week 7606, Derwent Publications Ltd., London, GB; AN 76-10676X

**Beschreibung**

Die vorliegende Erfindung betrifft ein beschichtetes Material aus (a) einem dielektrischen Träger, der (b) auf mindestens einer Oberfläche teilweise oder ganz mit einem Silikat beschichtet ist, das einen kristallinen und elektrisch leitenden Charge-Transfer Komplex enthält; ein Verfahren zu dessen Herstellung durch Beschichtung des Trägers mit einer einen Charge-Transfer Komplex enthaltenden silikatbildenden Zusammensetzung und deren anschliessende Härtung; und deren Verwendung als antistatisch ausgerüstete oder elektrisch leitende Materialien.

Zusammensetzungen aus kristallinen und elektrisch leitenden Charge-Transfer Komplexen und einem organischem Bindemittel sind schon als Beschichtungsmittel für dielektrische Materialien zur antistatischen Ausrüstung vorgeschlagen worden. Als ein Beispiel werden die in der US-A-5 009 812 beschriebenen Zusammensetzungen genannt. Bei solchen Materialien wird die Haftung der Schicht auf dem Träger sowie deren thermomechanische Stabilität und Oberflächenfestigkeit für einige Anwendungszwecke als zu gering empfunden.

T. Ohsawa et al. beschreiben im Japanese Journal of Applied Physics, Vol. 30, No. 118, Seiten 1953 bis 1954 (1991) mit Silikaten beschichtete Gläser, wobei die Silikatschicht ein polykationisches Poly(2,5-diethoxy)anilin oder Polypyrrol enthält. Die Oxidation des Anilins und Pyrrols wird chemisch mit $FeCl_3$ durchgeführt. Bei der chemischen Methode sind unerwünschte Reaktionsprodukte in der Silikatschicht, die die Transparenz und die elektrische Leitfähigkeit beeinflussen und Verfärbungen verursachen, nicht zu vermeiden. Diese Materialien sind in der Technik schon auf Grund des Herstellungsverfahrens nur eingeschränkt verwendbar. Zudem werden die erzielbaren elektrischen Leitfähigkeiten als zu gering angesehen, da die kugelförmigen Polymerteilchen in der Matrix isoliert sind.

Es ist ferner bekannt, Gläser mit elektrisch leitenden Schichten aus Metalloxiden wie zum Beispiel Antimon-/Zinnoxid oder Indium-/Zinnoxid zu versehen (ATO- beziehungsweise ITO-Gläser). Diese Schichtmaterialien weisen ausgezeichnete optische, elektrische und mechanische Eigenschaften auf. Die Schichten müssen jedoch mit Hilfe von Vakuumverdampfungsverfahren bei hohen Temperaturen aufgebracht werden, was teuer, unwirtschaftlich und für grosse Teile unpraktikabel ist.

Es wurde nun gefunden, dass man antistatische und elektrisch leitende Silikatschichten mit ausgezeichneter Haftung auf einem Träger erhält, wenn man kristalline Charge-Transfer Komplexe einverleibt Das Schichtmaterial kann dabei in einfacher Weise nach klassischen Beschichtungsmethoden hergestellt werden. Die Beschichtungen sind thermomechanisch und chemisch stabil, und sie weisen hervorragende elektrische, mechanische und optische Eigenschaften auf, insbesondere eine hohe Kratzfestigkeit, Transparenz, Oberflächenglätte und elektrische Leitfähigkeit. Die Transparenz ist gegenüber mit Polypyrrolen oder Polyanilinen gefüllten Silikatschichten erheblich verbessert Ferner ist es möglich, auch sehr dünne Schichten herzustellen. Ein besonderer Vorteil des Verfahrens zur Herstellung von erfindungsgemässen Silikatschichten besteht in der Verwendung von Charge-Transfer Komplexen in wässrigen oder wässrig-organischen Systemen, die Silikatbildner wie zum Beispiel Tetraalkoxysilane enthalten und einfach zu handhaben sind, wobei die Komplexe überraschend stabil sind gegenüber Zusätzen wie Säuren oder Basen zum hydrolytischen Aufbau der Silikatschichten.

Ein Gegenstand der Erfindung ist ein beschichtetes Material aus (a) einem festen dielektrischen oder halbleitenden Träger, der (b) auf mindestens einer Oberfläche teilweise oder ganz mit einem Silikat beschichtet ist, dem mindestens ein kristalliner Charge-Transfer Komplex der Formel I

$$AB_y \qquad (I)$$

in Form eines Nadelnetzwerks einverleibt ist, worin A für das Kation eines organischen Elektronendonators oder ein Metallkation und B für das Anion eines anorganischen oder organischen Elektronenacceptors stehen, und y eine ganze oder gebrochene Zahl von 0,1 bis 3 bedeutet, mit der Massgabe, dass B ein organischer Elektronenakzeptor ist, wenn A ein Metallkation darstellt.

Geeignete Träger sind solche, die bei der Härtungstemperatur zur Bildung der Silikatschichten stabil sind. Es kann sich um unverstärkte oder verstärkte Kunststoffe handeln, zum Beispiel Duroplaste, Thermoplaste oder strukturell vernetzte Polymere. Einige Beispiele sind Epoxidharze, Polyesterharze, Polyacrylate oder Polymethacrylate einschliesslich der Copolymeren mit unsubstituierten oder substituierten Olefinen (organische Gläser), Polyamide, Polyimide, Polyester, aromatische Polysulfone, Polyethersulfone und Polyether.

Bevorzugt sind Träger aus einem anorganischen Material, zum Beispiel Gläsern, Silikaten, Metalloxiden, Metall- und Halbmetallcarbiden, Metall- und Halbmetallnitriden, Keramiken und Halbleitern. Bevorzugt handelt es sich bei dem Träger um Gläser. Bevorzugt sind transparente Trägermaterialien und besonders bevorzugt sind transparente Gläser.

Die Dicke der Silikatschicht kann zum Beispiel 0,1 bis 100 μm, bevorzugt 0,1 bis 50 μm, bevorzugter 0,1 bis 20 μm, noch bevorzugter 0,1 bis 10 μm, besonders bevorzugt 0,1 bis 5 μm und insbesondere bevorzugt 0,3 bis 3 μm betragen.

Unter Silikatschichten werden solche Materialien verstanden, die nach der bekannten Sol-Gel Methode erhältlich sind. Die Methode und Materialien zur Herstellung sind zum Beispiel im Japanese Journal of Applied Physics, Vol. 30, No. 118, Seiten 1953 bis 1954 (1991) beschrieben. Bei diesen Silikaten handelt es sich um Netzstrukturen aus SiO-Einheiten, die Polykondensate von Tetraalkoxysilanen darstellen, oder um Netzstrukturen mit SiO-Einheiten, TriorganoSiO-Einheiten, DiorganoSiO-Einheiten, P(O)-O-Einheiten und/oder P-O-Einheiten, die Copolycondensate aus Mischungen von Tetraalkoxysilanen mit Monorganotrialkoxysilanen und/oder Diorganodialkoxysilanen und gegebenenfalls Phosphoroxyeinheiten bildenden Comonomeren darstellen. Phosphoroxy-Einheiten bildende Monomere sind zum Beispiel Phosphorigsäure- und Phosphorsäureester mit $C_1$-$C_6$-Alkyl-, Phenyl oder Benzylgruppen, Phosphorsäure und Polyphosphorsäuren. Die Endgruppen der Netzstrukturen enthalten Alkoxygruppen und/oder Organogruppen, wobei deren Anteil hauptsächlich von den Reaktionsbedingungen bei der Polykondensation und der verwendeten Comonomeren abhängt. Die Silikatschicht kann aus 50 bis 100 Mol-%, bevorzugt 70 bis 100 Mol-% und besonders bevorzugt 90 bis 100 Mol-% Tetraalkoxysilanen, und 50 bis 0 Mol-%, bevorzugt 30 bis 0 Mol-% und besonders bevorzugt 10 bis 0 Mol-% Comonomeren aufgebaut sein. Ganz besonders bevorzugt sind Silikatschichten nur aus Tetraalkoxysilanen. Alkoxy bedeutet bevorzugt Butoxy, Propoxy und besonders bevorzugt Ethoxy oder Methoxy. Organo bedeutet zum Beispiel $C_1$-$C_{12}$- und bevorzugt $C_1$-$C_6$-Alkyl, sowie Phenyl und Benzyl.

In einer bevorzugten Ausführungsform ist mindestens eine Oberfläche vollständig beschichtet. Teilweise beschichtete Oberflächen können besonders dann gewünscht sein, wenn das beschichtete Material als Elektrode verwendet werden soll.

Der Gehalt an Charge-Transfer Komplexen hängt im wesentlichen von der angestrebten Anwendung ab. Die Schicht kann zum Beispiel 0,1 bis 90 Gew.-%, bevorzugt 0,1 bis 80 Gew.-%, bevorzugter 0,1 bis 70 Gew.-%, noch bevorzugter 0,1 bis 50 Gew.-%, besonders bevorzugt 0,1 bis 40 Gew.-% und insbesondere bevorzugt 0,5 bis 30 Gew.-% eines Charge-Transfer Komplexes und 99,9 bis 10 Gew.-%, bevorzugt 99,9 bis 20 Gew.-%, bevorzugter 99,9 bis 30 Gew.-%, noch bevorzugter 99,9 bis 50 Gew.-%, besonders bevorzugt 99,9 bis 60 Gew.-% und insbesondere bevorzugt 99,5 bis 70 Gew.-% Silikat enthalten.

Bei hohen Gehalten an Charge-Transfer Komplexen können sich die Kristalle aus der Oberfläche erheben, aber vom Silikat bedeckt bleiben, und eine gewünschte Rauhigkeit für nicht spiegelnde Flächen hervorrufen. Falls eine Glättung gewünscht ist, kann eine weitere dünne Silikatschicht aufgebracht werden.

Kristalline und elektrisch leitende Charge-Transfer Komplexe, die auch als Radikalkationensalze bezeichnet werden, besonders solche mit monomeren organischen Kationen oder Metallkationen (Elektronendonatoren) und anorganischen oder organischen Anionen (Elektronenacceptoren) sind in grosser Anzahl bekannt und erfindungsgemäss verwendbar. Es handelt sich um nadelförmig Charge-Transfer Komplexe, da sie ein Netzwerk in der Matrix ausbilden und damit hohe elektrische Leitfähigkeiten erzielt werden können.

Das erfindungsgemässe beschichtete Material ist dadurch gekennzeichnet, dass die Silikatschicht nadelförmige kristalline Charge-Transfer Komplexe in Form eines Netzwerkes aus den Kristallnadeln in der Silikatmatrix enthält.

Die Charge-Transfer Komplexe können durch die allgemeine Formel I

$$AB_y \qquad (I)$$

dargestellt werden, worin A für das Kation eines organischen Elektronendonators oder ein Metallkation und B für das Anion eines anorganischen oder organischen Elektronenacceptors stehen, und y eine ganze oder gebrochene Zahl von 0,1 bis 3 bedeutet, mit der Massgabe, dass B ein organischer Elektronenacceptor ist, wenn A ein Metallkation darstellt. Bei den Charge-Transfer Komplexen kann es sich um stöchiometrische oder nicht-stöchiometrische Zusammensetzungen handeln, je nach Kombination von Anion und Kation. In der Formel I bedeutet y bevorzugt eine Zahl von 0,15 bis 2, besonders bevorzugt von 0,2 bis 1,5.

Charge-Transfer Komplexe sind in grosser Zahl bekannt und in der Fachliteratur beschrieben, siehe zum Beispiel E. Conwell, Semiconductors and Semimetals, Volume 27, Seiten 31 bis 85, Academic Press Inc., New York (1990).

Geeignete Metallkationen sind zum Beispiel solche von Alkali- und Erdalkalimetallen, besonders Na und K, sowie von Übergangsmetallen wie Cu, Ag und Au.

Geeignete organische Elektronendonatoren sind zum Beispiel solche aus der Gruppe Kohlenwasserstoffaromaten wie zum Beispiel Naphthalin, Anthracen, Tetracen, Pyren, Cyclopentaperylen, Terphenyl, Quaterphenyl, Fluoranthrene und Perylen; N-, O- oder S-heterocyclische Aromaten mit 1 bis 3 gleichen oder verschiedenen Heteroatomen O, S und N, wie zum Beispiel Pyridine, Bipyridine, Bipyridinamine, Pyridazine, Pyrazine, Pyrimidine, Chinoline, Isochinoline, Phthalazine, Benzopyrazine, Acridine, Phenazine, Dihydrophenazine, Benzacridine, Phenanthroline, Benzodithiazole, Dibenzofurane, Bis(thio- oder -seleno- oder -telluropyrannylidene), 2,6-Diphenylpyrone, 1,6-Dithiapyren und Thiazoline; gebenenenfalls N,N-alkylierte Aminoaniline; mit S, Se oder Te di- oder tetrachalkogenierte Aromaten wie zum Beispiel Dithio-, Diseleno-, Ditelluro-, Tetrathio-, Tetraselenound Tetratelluronaphthaline, -anthracene und -tetracene; unsubstituierte und substituierte Tetrathio- Tetraseleno und Tetratellurofulvalene; Metallocene wie zum Beispiel Cobaltocen, Bicobaltocen und Ferrocene; Metallkomplexe von Phthalocayninen, Naphthalocyaninen und Porphyrinen; Oniumsalze wie zum Beispiel Ammonium-, Phosphonium-, Sulfonium- und Seleniumsalze wie Dimethyl- oder Diethylmorpholiniumiodid, Dimethylthiomorpholiniumiodid, N-Ethylmorpholinium, 4,5-Ethylendithio-3-methylthio-1,2-dithioliumiodid, Methyldiethyl- oder Ethyldimethyl- oder Triethylsulfoniumiodid, Triphenyl-methyl-oder -ethylphosphoniumiodid, Tetraphenylphosphoniumiodid und Tetraphenylstiboniumiodid. Diese Grundkörper können unsubstituiert oder mit $C_1$-$C_6$-Alkyl-, $C_1$-$C_6$-Alkoxy, $C_1$-$C_6$-Alkylthio, F, Cl, Br, CN und $NO_2$ substituiert sein.

Geeignete Elektronenakzeptoren sind unsubstituierte und substituierte 7,7,8,8-Tetracyanochinodimethane und Chinone, zum Beispiel 7,7,8,8-Tetracyano-p-chinodimethan, 11,11',12,12'-Tetracyano-2,6-naphthochinodimethan, Dicyanochinodimethan, Dicyano-p-benzochinon und Tetrabromdibenzochinon; unsubstituierte und substituierte N,N'-Dicyanobenzochinodiimine; Chlor-, Brom- und Iodanile; Tetracyanoethylen und Hexacyanobutadien. Geeignete Substituenten sind zum Beispiel $C_1$-$C_6$-Alkyl-, $C_1$-$C_6$-Alkoxy, $C_1$-$C_6$-Alkylthio, F, Cl, Br, CN und $NO_2$.

Weitere geeignete Elektronenakzeptoren sind Mineral-, Sauerstoff- und Komplexsäuren mit den Anionen $F^-$, $Cl^-$, $Br^-$, $I^-$, $CN^-$, $OCN^-$, $SCN^-$, $SeCN^-$, $N_3^-$, $I_3^-$, $I_2Br^-$, $IBr_2^-$, $BrICl^-$, $Br_3^-$, $ICl_2^-$, $CuCl_2^-$, $CuBr_2^-$, $AgCl_2^-$, $AgBr_2^-$, $AgI_2^-$, $Ag(CN)_2^-$, $AuCl_2^-$, $AuBr_2^-$, $AuI_2^-$, $Au(CN)_2^-$, $NO_3^-$, $C(CN)_3^-$, $ClO_4^-$, $BrO_4^-$, $IO_4^-$, $ReO_4^-$, $FSO_3^-$, $PO_2F_2^-$, $BF_4^-$, $InBr_4^-$, $InI_4^-$, $TlBr_4^-$, $TlI_4^-$, $FeCl_4^-$, $AuCl_4^-$, $AuBr_4^-$, $ICl_4^-$, $SiF_5^-$, $TeF_5^-$, $PF_6^-$, $AsF_6^-$, $SbF_6^-$, $SbCl_6^-$, $NbF_6^-$ oder $TaF_6^-$.

Bevorzugt verwendete Charge-Transfer Komplexe sind 5,6,11,12-Tetrathio- oder -Tetraselenotetracenhalogenide oder -kupferhalogenide, zum Beispiel (5,6,11,12-Tetrathiotetracen)$_2$Cl, (5,6,11,12-Tetrathiotetracen)$_2$Br, (5,6,11,12-Tetrathiotetracen)$_2$I$_3$, 5,6,11,12-Tetrathiotetracen(CuCl$_2$)$_{0,4-0,48}$, (5,6,11,12-Tetraselenotetracen)$_2$Cl, (5,6,11,12-Tetraselenotetracen)$_2$Br, 5,6,11,12-Tetraselenotetracen(CuCl$_2$)$_{0,4-0,48}$ und (2-Fluor-5,6,1,12-tetrathiotetracen)$_2$Cl.

Ein weiterer Gegenstand der Erfindung ist ein Verfahren zur Herstellung des erfindungsgemässen beschichteten Materials, das dadurch gekennzeichnet ist, dass man

(a) mindestens eine Oberfläche eines festen dielektrischen Trägers teilweise oder vollständig mit einer silikatbildenden Zusammensetzung, in der ein Charge-Transfer Komplex gelöst oder dispergiert ist, beschichtet,
(b) die aufgetragene Schicht trocknet, und
(c) die getrocknete Schicht bei erhöhten Temperaturen härtet.

Die Beschichtung kann nach an sich bekannten Methoden erfolgen, zum Beispiel mittels Streich-, Giess-, Rakel-, Spin-Coating- oder Sprayverfahren. Letzteres wird bevorzugt bei dispergierten Charge-Transfer Komplexen angewendet, da man Beschichtungen mit isotropen Eigenschaften erzielen kann.

Die Charge-Transfer Komplexe sollen gegenüber dem Reaktionsmedium inert sein, damit deren Eigenschaften nicht verändert werden. Charge-Transfer Komplexe sind gegenüber den hier verwendeten Chemikalien im allgemeinen chemisch stabil. Die Menge des Charge-Transfer Komplexes ist zuvor für das beschichtete Material erwähnt worden.

Die silakatbildende Zusammensetzung enthält neben den Charge-Transfer Komplexen und den silikatbildenden Monomeren und gegebenenfalls Comonomeren eine Säure oder Base und Wasser für die Polykondensation. Geeignete Säuren sind Mineralsäuren wie zum Beispiel Salzsäure, Schwefelsäure, Perchlorsäure oder Phosphorsäure. Geeignete Basen sind zum Beispiel Alkali- oder Erdalkalimetallbasen [NaOH, KOH, Ca(OH)$_2$] oder -carbonate (NaHCO$_3$, KHCO$_3$, Na$_2$CO$_3$ und K$_2$CO$_3$). Silikatbildende Zusammensetzungen sind bekannt und zum Beispiel in dem von Allied Signal Inc., South Milpitas, California verteilten Abdruck aus Microelectronic Manufacturing and Testing, Lake Publishing Corporation, Libertyville, Illinois U.S.A. (April 1989) beschrieben. Die Zusammensetzungen werden auch als Sol-Gel Lösungen bezeichnet und sind kommerziell erhältlich. Die Menge an silikatbildenden Monomeren kann zum Beispiel 10 bis 60 Gew.-%, bevorzugt 20 bis 50 Gew.-% betragen, bezogen auf die verwendete Sol/Gel-Lösung.

Die Zusammensetzungen enthalten vorteilhaft ein mit Wasser mischbares polares und bevorzugt protisches Lösungsmittel, beispielsweise ein Alkanol, um eine homogene und gut verarbeitbare Reaktionsmasse zu erzielen. Geeignete Alkanole sind solche, die beim Trocknen leicht verdampfen, zum Beispiel Butanole, Propanole, Ethanol und Methanol. Andere geeignete Lösungsmittel sind Ketone wie Aceton und Ether wie Diethylether.

Es können sowohl im Reaktionsmedium unlösliche als auch lösliche Charge-Transfer Komplexe verwendet werden. Bei der Verwendung löslicher Komplexe wird vorteilhaft zusätzlich ein inertes polares und bevorzugt aprotisches Lösungsmittel eingesetzt, in dem der Komplex löslich ist. Die Lösungsmittel können alleine oder in Mischung aus mindestens 2 Lösungsmitteln verwendet werden. Beispiele sind: Ether wie Dibutylether, Tetrahydrofuran, Dioxan, Methylenglykol, Dimethylethylenglykol, Dimethyldiethylenglykol, Diethyldiethylenglykol, Dimethyltriethylenglykol, halogenierte Kohlenwasserstoffe wie Methylenchlorid, Chloroform, 1,2-Dichlorethan, 1,1,1-Trichlorethan, 1,1,2,2-Tetrachlorethan, Carbonsäureamide und Lactame wie N,N-Dimethylformamid, N,N-Diethylformamid, N,N-Dimethylacetamid, N,N-Diethylacetamid, N-Methyl-γ-butyrolactam, N-Methyl-ε-caprolactam, N-Methylpyrrolidon, N-Acetylpyrrolidon, Tetramethylharnstoff, Hexamethylphosphorsäuretriamid, Sulfoxide wie Dimethylsulfoxid, Sulfone wie Dimethylsulfon, Diethylsulfon, Trimethylensulfon, Tetramethylensulfon, N-Methylpyrrolidin, N-Methylpiperidin, N-Methylmorpholin, substituierte Benzole wie Benzonitril, Chlorbenzol, o-Di-chlorbenzol, 1,2,4-Trichlorbenzol, Nitrobenzol, Anisol, Ketone wie Aceton, Methylisobutylketon. Es können auch apolare Lösungsmittel wie zum Beispiel Kohlenwasserstoffe (Hexan, Cyclohexan, Metylcyclohexan, Benzol, Toluol und Xylol verwendet werden. Gelöste Charge-Transfer Komplexe kristallisieren im allgemeinen beim Trocknen aus.

Die Zusammensetzung kann weitere Verarbeitungshilfsmittel enthalten, zum Beispiel Tenside, Dispergiermittel, pH-Puffer, viskositätssteigernde Mittel, Haftungsmittel und Fliessmittel. Ferner können farbgebende Zusätze enthalten sein. Tenside werden im allgemeinen in einer Menge von 0,01 bis 3 Gew.-% zugegeben, bezogen auf das Beschichtungssystem. Die Charge-Transfer Komplexe können in einer Menge von zum Beispiel 10 bis 60 Gew.-%, bevorzugter 20 bis 50 Gew.-% im Beschichtungssystem (Lösungsmittel, Säure oder Base und silikatbildende Verbindung) enthalten sein.

Die Trocknung der aufgetragenen Schicht wird vorteilhaft bei Raumtemperatur und zweckmässig im Vakuum, zum Beispiel $10^6$ bis $10^9$ Pa oder $10^8$ bis $10^9$ Pa, vorgenommen.

Die Härtung wird im allgemeinen bei Temperaturen ab 50 °C, zum Beispiel 50 bis 200 °C, bevorzugter 80 bis 200 °C vorgenommen. Die Härtung kann ebenfalls unter Vakuum durchgeführt werden.

Im einzelnen kann das Verfahren so durchgeführt werden, dass man die silikatbildende Zusammensetzung gegebenenfalls mit Verarbeitungshilfsmitteln vermischt und dann den Charge-Transfer Komplex dispergiert oder die Zusammensetzung mit einer Lösung eines Charge-Transfer Komplexes vermischt. Danach beschichtet man den Träger, trocknet das beschichtete Material und härtet danach die Schicht bei erhöhten Temperaturen.

Eine besonders bevorzugten Ausführungsform des erfindungsgemässen Verfahrens ist dadurch gekennzeichnet, dass man

(a) mindestens eine Oberfläche des Trägers mit einer Zusammensetzung beschichtet, die Tetramethoxy- oder Tetraethoxysilan, einen dispergierten nadelförmig-kristallinen Charge-Transferkomplex, ein Tensid, verdünnte Salzsäure, Wasser und ein $C_1$-$C_4$-Alkanol enthält,
(b) die Schicht bei Raumtemperatur gegebenenfalls im Vakuum trocknet, und
(c) die getrocknete Schicht bei Temperaturen von 100 bis 200 °C härtet.

Das erfindungsgemässe beschichtete Material weist hervorragende elektrische, optische, thermomechanische Eigenschaften und mechanische Oberflächeneigenschaften auf. Je nach der Eigenleitfähigkeit der Charge-Transfer Komplexe und deren Kristallgestalt können überraschend schon bei niedrigen Füllgraden, zum Beispiel 0,5 bis 5 Gew.-%, ausgezeichnete elektrische Eigenschaften erzielt werden. Das Material kann opak bis transparent sein, je nach Füllgrad und Art des Trägers. Die Oberfächenhärte und -glätte ist ausgezeichnet. Die Schichten weisen zudem eine hohe Kratzfestigkeit und Haftfestigkeit auf.

Bei dem erfindungsgemässen beschichteten Material kann es sich zum Beispiel um antistatisch ausgerüstete Körper beliebiger Gestalt handeln, wobei auf Grund des geringen Oberflächenwiderstandes eine überraschend schnelle Ableitung von elektrischer Ladung erzielt werden kann. Das erfindungsgemässe beschichtete Material kann auch als elektrischer Leiter, zum Beispiel als Elektrodenmaterial verwendet werden.

Ein weiterer Gegenstand der Erfindung ist die Verwendung des erfindungsgemässen beschichteten Materials als antistatisch ausgerüstete oder elektrisch leitende Materialien.

Das erfindungsgemässe Verfahren kann insbesondere zur Herstellung von transparenten, antistatischen und kratzfesten Beschichtungen auf Bildschirmen angewendet werden. Ein weiterer Gegenstand der Erfindung ist ein Bildschirm oder eine Bildröhre aus Glas, auf der eine dünne und transparente Silikatschicht aufgebracht ist, der mindestens ein kristalliner Charge-Transfer Komplex einverleibt ist. Die Dicke der Schicht beträgt bevorzugt 0.3 bis 10 µm und der Gehalt an Charge-Transfer Komplexen beträgt bevorzugt 0,5 bis 30 Gew.-% und besonders bevorzugt 0,5 bis 5 Gew.-%, bezogen auf die Silikatschicht. Es ist besonders vorteilhaft, dass die Bildröhre direkt beschichtet werden kann und dass die antistatische Ausrüstung nicht über einen Vorsatz erfolgt. Ferner ist es vorteilhaft, dass die Beschichtung der Bildröhre ohne Vakuum und bei relativ niedrigen Temperaturen durchgeführt werden kann.

Die nachfolgenden Beispiele erläutern die Erfindung näher.

Beispiel 1:

30 mg (5,6,11,12-Tetraselentetracen)$_2$chloridin Form von Kristallnadeln werden in einer Mischung aus 2 g Polyvinylalkohollösung (2% in Wasser), 30 µl einer Additivlösung (Polyurethanoligomer gelöst in Anisol/Xylol) und 3 g einer Sol-Gel-Lösung aus 20 Gewichtsteilen Tetramethoxysilan, 2 Gewichtsteilen 1 N HCl, 43 Gewichtsteilen Wasser, 103 Gewichtsteilen Ethanol, und 35 Gewichtsteilen Polvinylalkohollösung (2% in Wasser) dispergiert. Mit der Dispersion werden Schichten mit einer Nassfilmdicke von ca. 24 µm durch Rakeln hergestellt. Die Schichten werden zuerst bei Raumtemperatur und anschliessend bei 130°C getrocknet und gehärtet. Es werden transparente, leitende Schichten erhalten. Der Oberflächenwiderstand beträgt 300 kOhm/cm$^2$, die Härte beträgt 6H (das heisst die Schicht wird von einem Bleistift der Härte 6H nicht zerkratzt).

Beispiel 2:

Zu 1 g einer Sol-Gel-Lösung aus 10 Gewichtsteilen Tetramethoxysilan, 1 Gewichtsteil 1 N HCl, 6 Gewichtsteilen Wasser, 10 Gewichtsteilen Ethanol und 4 Gewichtsteilen Polyvinylalkohollösung (2% in Wasser) werden 4 g einer bei Raumtemperatur gesättigten Lösung von einem in der EP-A-0 224 207 beschriebenen Charge-Transfer Komplex aus N-Isoamylisochinolin und 7,7,8,8-Tetracyanochinodimetan (TCNQ) in Aceton gegeben. Mit etwa 0,7 ml der grünen Lösung wird mittels Schleudergiessen eine Glasplatte (10 × 10 cm) bei einer Drehzahl von 400 min$^{-1}$ beschichtet. Die Schicht wird zuerst bei Raumtemperatur und anschliessend bei 100 °C und 0,1 mbar während etwa 2 min gehärtet. Es werden transparente, leitende Schichten erhalten. Der Oberflächenwiderstand beträgt $3.5 \times 10^8$ Ohm/cm$^2$.

Beispiel 3:

Zu 1 g einer Sol-Gel-Lösung aus 10 Gewichtsteilen Tetraethoxysilan, 0,6 Gewichtsteilen 1 N HCl, 10 Gewichtsteilen Wasser, 10 Gewichtsteilen Ethanol und 4 Gewichtsteilen Polyvinylalkohollösung (2% in Wasser) werden 3 g einer bei Raumtemperatur gesättigten Lösung des Charge-Transfer Komplexes gemäss Beispiel 2 in Aceton gegeben. Mit etwa 0,7 ml der grünen Lösung wird mittels Schleudergiessen eine Glasplatte (10 × 10 cm) bei einer Drehzahl von 400 min$^{-1}$ beschichtet. Die Schicht wird zuerst bei Raumtemperatur und anschliessend bei 100 °C und 0,1 mbar während etwa 2 min gehärtet. Es werden transparente, leitende Schichten erhalten. Der Oberflächenwiderstand beträgt $4 \times 10^7$ Ohm/cm$^2$.

**Patentansprüche**

1. Beschichtetes Material aus (a) einem festen dielektrischen oder halbleitenden Träger, der (b) auf mindestens einer Oberfläche teilweise oder ganz mit einem Silikat beschichtet ist, dem mindestens ein kristalliner Charge-Transfer Komplex der Formel I

$$AB_y \qquad (I)$$

in Form eines Nadelnetzwerks einverleibt ist, worin A für das Kation eines organischen Elektronendonators oder ein Metallkation und B für das Anion eines anorganischen oder organischen Elektronenacceptors stehen, und y eine ganze oder gebrochene Zahl von 0,1 bis 3 bedeutet, mit der Massgabe, dass B ein organischer Elektronenakzeptor ist, wenn A ein Metallkation darstellt.

2. Beschichtetes Material gemäss Anspruch 1, dadurch gekennzeichnet, dass es sich bei dem Träger um einen Kunststoff, Gläser, Silikate, Metalloxide, Metall- und Halbmetallcarbide, Metall- und Halbmetallnitride, Keramiken oder Halbleiter handelt.

3. Beschichtetes Material gemäss Anspruch 1, dadurch gekennzeichnet, dass es sich bei dem Träger um ein transparentes Material handelt.

4. Beschichtetes Material gemäss Anspruch 3, dadurch gekennzeichnet, dass es sich bei dem Träger um ein transparentes Glas handelt.

5. Beschichtetes Material gemäss Anspruch 1, dadurch gekennzeichnet, dass die Dicke der Silikatschicht 0,1 bis 100 μm ist.

6. Beschichtetes Material gemäss Anspruch 5, dadurch gekennzeichnet, dass die Dicke der Silikatschicht 0,1 bis 50 μm ist.

7. Beschichtetes Material gemäss Anspruch 5, dadurch gekennzeichnet, dass die Dicke der Silikatschicht 0,1 bis 20 μm ist.

8. Beschichtetes Material gemäss Anspruch 1, dadurch gekennzeichnet, dass die Silikatschicht nach der Sol-Gel Methode hersgestellt ist.

9. Beschichtetes Material gemäss Anspruch 8, dadurch gekennzeichnet, dass die Silikatschicht ein Polykondensat von Tetraalkoxysilanen darstellt.

10. Beschichtetes Material gemäss Anspruch 9, dadurch gekennzeichnet, dass es sich bei dem Alkoxy um Methoxy oder Ethoxy handelt.

11. Beschichtetes Material gemäss Anspruch 1, dadurch gekennzeichnet, dass die Schicht 0,1 bis 90 Gew.-% Charge-Transfer Komplex und 99.9 bis 10 Gew.-% Silikat enthält.

12. Beschichtetes Material gemäss Anspruch 11, dadurch gekennzeichnet, dass die Schicht 0,1 bis 80 Gew.-% Charge-Transfer Komplex und 99.9 bis 20 Gew.-% Silikat enthält

13. Beschichtetes Material gemäss Anspruch 12, dadurch gekennzeichnet, dass die Schicht 0,1 bis 50 Gew.-% Charge-Transfer Komplex und 99.9 bis 50 Gew.-% Silikat enthält

14. Beschichtetes Material gemäss Anspruch 1, dadurch gekennzeichnet, dass es sich bei dem Charge-Transfer Komplex um 5,6,11,12-Tetrathio- oder -Tetraselenotetracenhalogenide oder -kupferhalogenide handelt.

**15.** Beschichtetes Material gemäss Anspruch 14, dadurch gekennzeichnet, dass es sich bei dem Charge-Transfer Komplex um (5,6,11,12-Tetrathiotetracen)$_2$Cl, 5,6,11,12-Tetrathiotetracen)$_2$Br, (5,6,11,12-Tetrathiotetracen)$_2$I$_3$, 5,6,11,12-Tetrathiotetracen(CuCl$_2$)$_{0,4\text{-}0,48}$, (5,6,11,12-Tetraselenotetracen)$_2$Cl, (5,6,11,12-Tetraselenotetracen)$_2$Br, 5,6,11,12-Tetraselenotetracen(CuCl$_2$)$_{0,4\text{-}0,48}$ und (2-Fluor-5,6,11,12-tetrathiotetracen)$_2$Cl handelt.

**16.** Verfahren zur Herstellung des beschichteten Materials gemäss Anspruch 1, dadurch gekennzeichnet, dass man

(a) mindestens eine Oberfläche eines festen dielektrischen Trägers teilweise oder vollständig mit einer silikatbildenden Zusammensetzung, in der ein Charge-Transfer Komplex gelöst oder dispergiert ist, beschichtet,
(b) die aufgetragene Schicht trocknet, und
(c) die getrocknete Schicht bei erhöhten Temperaturen härtet.

**17.** Verfahren gemäss Anspruch 16, dadurch gekennzeichnet, dass man

(a) mindestens eine Oberfläche des Trägers mit einer Zusammensetzung beschichtet, die Tetramethoxy- oder Tetraethoxysilan, einen dispergierten nadelförmig-kristallinen Charge-Transferkomplex, ein Tensid, verdünnte Salzsäure, Wasser und ein C$_1$-C$_4$-Alkanol enthält,
(b) die Schicht bei Raumtemperatur gegebenenfalls im Vakuum trocknet, und
(c) die getrocknete Schicht bei Temperaturen von 100 bis 200 °C härtet.

**18.** Verwendung des beschichteten Materials gemäss Anspruch 1 als antistatisch ausgerüstete oder elektrisch leitende Materialien.

**19.** Bildschirm oder Bildröhre aus Glas, auf der eine dünne und transparente Silikatschicht aufgebracht ist, der mindestens ein kristalliner Charge-Transfer Komplex nach Anspruch 1 einverleibt ist.

**20.** Bildschirm oder Bildröhre gemäss Anspruch 19, dadurch gekennzeichnet, dass die Dicke der Silikatschicht 0,3 bis 10 μm beträgt.

**21.** Bildschirm oder Bildröhre gemäss Anspruch 19, dadurch gekennzeichnet, dass die Silikatschicht 0,5 bis 25 Gew.-% mindestens eines Charge-Transfer Komplexes enthält, bezogen auf die Silikatschicht.

**Claims**

**1.** A coated material comprising (a) a solid dielectric or semiconducting substrate which is (b) partially or completely coated on at least one surface with a silicate into which at least one crystalline charge transfer complex is incorporated, in the form of a needle network, of the formula I

$$AB_y \qquad (I)$$

wherein A is the cation of an organic electron donor or a metal cation, and B is the anion of an inorganic or organic electron acceptor, and y is a whole number or a fraction from 0.1 to 3, with the proviso that B is an organic electron acceptor if A is a metal cation.

**2.** A coated material according to claim 1, wherein the substrate is a plastic, glasses, silicates, metal oxides, metal and semi-metal carbides, metal and semimetal nitrides, ceramics or semiconductors.

**3.** A coated material according to claim 1, wherein the substrate is a transparent material.

**4.** A coated material according to claim 3, wherein the substrate is a transparent glass.

**5.** A coated material according to claim 1, wherein the thickness of the silicate layer is from 0.1 to 100 μm.

**6.** A coated material according to claim 5, wherein the thickness of the silicate layer is from 0.1 to 50 μm.

**7.** A coated material according to claim 5, wherein the thickness of the silicate layer is from 0.1 to 20 μm.

**8.** A coated material according to claim 1, wherein the silicate layer is prepared by the sol-gel method.

**9.** A coated material according to claim 8, wherein the silicate layer is a polycondensate of tetraalkoxysilanes.

**10.** A coated material according to claim 9, wherein alkoxy is methoxy or ethoxy.

**11.** A coated material according to claim 1, wherein the layer contains 0.1 to 90% by weight of a charge transfer complex and 99.9 to 10% by weight of silicate.

**12.** A coated material according to claim 11, wherein the layer contains 0.1 to 80% by weight of a charge transfer complex and 99.9 to 20% by weight of silicate.

13. A coated material according to claim 12, wherein the layer contains 0.1 to 50% by weight of a charge transfer complex and 99.9 to 50% by weight of silicate.

14. A coated material according to claim 1, wherein the charge transfer complex is a 5,6,11,12-tetrathio- or 5,6,11,12-tetraselenotetracene halide or cuprohalide.

15. A coated material according to claim 14, wherein the charge transfer complex is $(5,6,11,12\text{-tetrathiotetracene})_2Cl$, $(5,6,11,12\text{-tetrathiotetracene})_2Br$, $(5,6,11,12\text{-tetrathiotetracene})_2I_3$, $5,6,11,12\text{-tetrathiotetracene}(CuCl_2)_{0.4-0.48}$, $(5,6,11,12\text{-tetraselenotetracene})_2Cl$, $(5,6,11,12\text{-tetraselenotetracene})_2Br$, $5,6,11,12\text{-tetraselenotetracene-}(CuCl_2)_{0.4-0.48}$ and $(2\text{-fluoro-}5,6,11,12\text{-tetrathiotetracene})_2Cl$.

16. A process for the preparation of the coated material according to claim 1, which comprises

    (a) coating at least one surface of a solid dielectric substrate partially or completely with a silicate-forming composition in which a charge transfer complex is dissolved or dispersed,
    (b) drying the layer applied, and
    (c) curing the dried layer at elevated temperature.

17. A process according to claim 16, which comprises

    (a) coating at least one surface of the substrate with a composition comprising tetramethoxysilane or tetraethoxysilane, a dispersed acicular crystalline charge transfer complex, a surfactant, dilute hydrochloric acid, water and a $C_1$-$C_4$alkanol,
    (b) drying the layer at room temperature without or under vacuum, and
    (c) curing the dried layer at temperatures from 100 to 200°C.

18. Use of the coated material according to claim 1 as antistatic or electrically conductive material.

19. A screen or picture tube of glass coated with a thin and transparent silicate layer into which at least one crystalline charge transfer complex according to claim 1 is incorporated.

20. A screen or picture tube according to claim 19, wherein the thickness of the silicate layer is from 0.3 to 10 µm.

21. A screen or picture tube according to claim 19, wherein the silicate layer contains from 0.5 to 25% by weight of at least one charge transfer complex, based on the silicate layer.

## Revendications

1. Matériau revêtu constitué par (a) un support solide diélectrique ou semi-conducteur, qui (b) est partiellement ou totalement revêtu sur au moins une surface par un silicate dans lequel est incorporé au moins un complexe de transfert de charge cristallin de formule I

$$AB_y \qquad (I)$$

sous forme d'un réseau en aiguilles, où A représente le cation d'un donneur d'électrons organique ou un cation métallique et B représente l'anion d'un accepteur d'électrons inorganique ou organique, et y est un nombre entier ou fractionnaire compris entre 0,1 et 3, à condition que B soit un accepteur d'électrons organique lorsque A est un cation métallique.

2. Matériau revêtu selon la revendication 1, caractérisé en ce que le support est une matière plastique, un verre, un silicate, un oxyde métallique, un carbure de métal ou de non-métal, un nitrure de métal ou de non-métal, une céramique ou un semi-conducteur.

3. Matériau revêtu selon la revendication 1, caractérisé en ce que le support est un matériau transparent.

4. Matériau revêtu selon la revendication 3, caractérisé en ce que le support est un verre transparent.

5. Matériau revêtu selon la revendication 1, caractérisé en ce que l'épaisseur de la couche de silicate est de 0,1 à 100 µm.

6. Matériau revêtu selon la revendication 5, caractérisé en ce que l'épaisseur de la couche de silicate est de 0,1 à 50 µm.

7. Matériau revêtu selon la revendication 5, caractérisé en ce que l'épaisseur de la couche de silicate est de 0,1 à 20 µm,

8. Matériau revêtu selon la revendication 1, caractérisé en ce que la couche de silicate est produite par le procédé sol-gel.

9. Matériau revêtu selon la revendication 8, caractérisé en ce que la couche de silicate est un polycondensat de tétraalcoxysilanes.

**10.** Matériau revêtu selon la revendication 9, caractérisé en ce que l'alcoxy est un méthoxy ou un éthoxy.

**11.** Matériau revêtu selon la revendication 1, caractérisé en ce que la couche contient 0,1 à 90 % en masse de complexe de transfert de charge et 99,9 à 10 % en masse de silicate.

**12.** Matériau revêtu selon la revendication 11, caractérisé en ce que la couche contient 0,1 à 80 % en masse de complexe de transfert de charge et 99,9 à 20 % en masse de silicate.

**13.** Matériau revêtu selon la revendication 12, caractérisé en ce que la couche contient 0,1 à 50 % en masse de complexe de transfert de charge et 99,9 à 50 % en masse de silicate.

**14.** Matériau revêtu selon la revendication 1, caractérisé en ce que le complexe de transfert de charge est un halogénure ou un cuprohalogénure de 5,6,11,12-tétrathio- ou tétrasélénotétracène.

**15.** Matériau revêtu selon la revendication 14, caractérisé en ce que le complexe de transfert de charge est le $(5,6,11,12\text{-tétrathiotétracène})_2Cl$, le $(5,6,11,12\text{-tétrathiotétracène})_2Br$, le $(5,6,11,12\text{-tétrathiotétracène})_2I_3$, le $5,6,11,12\text{-tétrathiotétracène}(CuCl_2)_{0,4\text{-}0,48}$, le $(5,6,11,12\text{-tétrasélénotétracène})_2Cl$, le $(5,6,11,12\text{-tétrasélénotétracène})_2Br$, le $5,6,11,12\text{-tétrasélénotétracène}(CuCl_2)_{0,4\text{-}0,48}$ et le $(2\text{-fluoro-}5,6,11,12\text{-tétrathiotétracène})_2Cl$.

**16.** Procédé de production du matériau revêtu selon la revendication 1, caractérisé en ce que

(a) on applique, sur tout ou partie d'au moins une surface d'un support diélectrique solide, une couche d'une composition génératrice d'un silicate dans laquelle est dissous ou dispersé un complexe de transfert de charge,
(b) on sèche la couche appliquée, et
(c) on durcit la couche séchée à haute température.

**17.** Procédé selon la revendication 16, caractérisé en ce que

(a) on applique, sur au moins une surface du support, une couche d'une composition contenant du tétraméthoxy- ou tétraéthoxysilane, un complexe de transfert de charge cristallin en aiguilles dispersé, un agent tensioactif, de l'acide chlorhydrique dilué, de l'eau et un alcanol en $C_1\text{-}C_4$,
(b) on sèche la couche à la température ambiante, éventuellement sous vide, et
(c) on durcit la couche séchée à des températures de 100 à 200°C.

**18.** Utilisation du matériau revêtu selon la revendication 1 comme matériau doté de propriétés antistatiques ou comme matériau électroconducteur.

**19.** Ecran ou tube image en verre, sur lequel est appliquée une couche de silicate mince et transparente, dans laquelle est incorporé au moins un complexe de transfert de charge cristallin selon la revendication 1.

**20.** Ecran ou tube image selon la revendication 19, caractérisé en ce que l'épaisseur de la couche de silicate est de 0,3 à 10 μm.

**21.** Ecran ou tube image selon la revendication 19, caractérisé en ce que la couche de silicate contient 0,5 à 25 % en masse d'au moins un complexe de transfert de charge, par rapport à la couche de silicate.